(19) Europäisches Patentamt
European Patent Office
Office européen des brevets

(11) **EP 2 435 847 B1**

(12) **FASCICULE DE BREVET EUROPEEN**

(45) Date de publication et mention
de la délivrance du brevet:
**12.03.2014 Bulletin 2014/11**

(51) Int Cl.:
*H01Q 1/28* *(2006.01)* *G01S 3/46* *(2006.01)*
*G01S 3/02* *(2006.01)*

(21) Numéro de dépôt: **10723978.2**

(22) Date de dépôt: **21.05.2010**

(86) Numéro de dépôt international:
**PCT/EP2010/057070**

(87) Numéro de publication internationale:
**WO 2010/136409 (02.12.2010 Gazette 2010/48)**

(54) **PROCEDE ET SYSTEME POUR LA DETERMINATION DE LA DIRECTION D'ARRIVEE D'UNE ONDE ELECTROMAGNETIQUE DE POLARISATION QUELCONQUE**

VERFAHREN UND SYSTEM ZUM BESTIMMEN DER EINFALLSRICHTUNG EINER BELIEBIGE POLARISATION AUFWEISENDEN ELEKTROMAGNETISCHEN WELLE

METHOD AND SYSTEM FOR DETERMINING THE DIRECTION OF ARRIVAL OF AN ELECTROMAGNETIC WAVE HAVING ANY POLARISATION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.05.2009 FR 0902524**

(43) Date de publication de la demande:
**04.04.2012 Bulletin 2012/14**

(73) Titulaire: **THALES**
**92200 Neuilly-sur-Seine (FR)**

(72) Inventeurs:
• **MESNAGE, Jean-Christophe**
**F-92700 Colombes (FR)**

• **ROGIER, Jean-Luc**
**F-92700 Colombes (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A-99/41804     US-A- 5 039 991**
**US-A- 5 608 411     US-B1- 7 268 728**

**EP 2 435 847 B1**

**Description**

La présente invention concerne un procédé et un système pour la détermination de la direction d'arrivée d'une onde électromagnétique de polarisation quelconque. Elle est utilisée notamment dans le domaine de la radiogoniométrie pour des signaux dont la fréquence se situe dans les bandes très hautes fréquences VHF (« Very High Frequency »), ultra hautes fréquences UHF(« Ultra High Frequency ») ou super hautes fréquences SHF(« Super High Frequency »). L'invention s'applique, par exemple, pour des applications aéroportées, terrestres, navales ou de contrôle du spectre.

La détermination de la direction d'arrivée d'une onde électromagnétique ou d'un signal radioélectrique se fait le plus souvent pour une onde, ou un signal, de polarisation rectiligne verticale car la détection de cette configuration est plus simple à mettre en oeuvre. En effet pour mesurer la direction d'arrivée d'un signal de polarisation verticale, on exploite la réponse d'un réseau d'antennes dont la polarisation est également verticale. Ce type de réseau d'antennes est facilement réalisable, notamment dans le contexte aéroporté. Sur un avion il est en effet plus facile de positionner des antennes à polarisation verticale pour des raisons d'encombrement.

Un problème technique que cherche à résoudre la présente invention est la détermination de la direction d'arrivée de signaux ayant une polarisation quelconque, notamment verticale, horizontale, elliptique ou circulaire, à l'aide d'un unique réseau d'antennes simple à mettre en oeuvre et compatible avec les contraintes de déploiement d'un tel réseau sur un avion.

Les solutions connues permettant de traiter, avec un même système de radiogoniométrie, à la fois des émissions polarisées horizontalement et verticalement utilisent deux réseaux d'antennes distincts présentant une double polarisation. Ces structures de réseaux présentent l'inconvénient d'être coûteuses, encombrantes et peu efficaces sur les polarisations horizontales pour les plus basses fréquences. Elles nécessitent d'effectuer deux types de mesures, une pour chaque polarisation, et de déterminer un critère permettant de sélectionner le résultat, en terme de direction d'arrivée de l'onde reçue, le plus probable. Ces solutions ne sont pas compatibles d'applications aéroportées car leur encombrement est trop important. De plus, elles ne permettent pas de traiter efficacement des polarisations circulaires voire elliptiques.

On connait par ailleurs le document US 7268728 qui décrit un procédé de localisation d'un émetteur mobile, par exemple situé sur un aéronef.

Un but de l'invention est de proposer une solution utilisant un seul réseau d'antennes sensible à la diversité de polarisation associé à une méthode de goniométrie adaptée à traiter la diversité de polarisation, cette solution permettant de déterminer la direction d'arrivée d'une onde de polarisation quelconque. De plus, pour rester compatible des contraintes liées aux applications aéroportées, il est nécessaire que l'invention puisse fonctionner avec des antennes de type monopole radômés qui sont spécifiques de ce type d'applications. Un autre but de l'invention est de proposer un système de radiogoniométrie compatible d'une application aéroportée.

A cet effet l'invention a pour objet un procédé de détermination de la direction d'arrivée d'une onde électromagnétique incidente de gisement $\underline{\theta}_0$, d'élévation $\underline{h}_0$, de fréquence $F_0$ et de polarisation quelconque $\underline{P}_0$, caractérisé en ce qu'il comporte au moins les étapes suivantes :

○ concevoir un unique réseau d'antennes comportant une pluralité d'éléments rayonnants pour chacun desquels les réponses vectorielles à deux signaux de polarisations distinctes POL1 et POL2 ne sont pas colinéaires,

○ déterminer une première table de calibration dudit réseau d'antennes contenant les réponses vectorielles $\underline{a}_1(F_i, \underline{X}_i)$ et $\underline{a}_2(F_i, \underline{X}_i)$ dudit réseau à deux fronts d'onde plans de polarisations distinctes POL1 et POL2 ,pour un ensemble de fréquences $F_i$ appartenant à un intervalle donné $[F_1, F_2]$ et un ensemble d'angles $\underline{X}_i$ appartenant à un intervalle donné $[\underline{X}_1, \underline{X}_2]$, lesdits angles $\underline{X}_i$ étant des angles de gisement $\underline{\theta}_i$ ou des angles d'élévation $\underline{h}_i$,

○ interpoler à ladite fréquence Fo les réponses vectorielles $\underline{a}_1(F_0, \underline{X}_i)$ et $\underline{a}_2(F_0, \underline{X}_i)$ du réseau pour chaque valeur $\underline{X}_i$ dudit intervalle $[\underline{X}_1, \underline{X}_2]$,

○ orthonormaliser lesdites réponses vectorielles $\underline{a}_1(F_0, \underline{X}_i)$ et $\underline{a}_2(F_0, \underline{X}_i)$ afin de produire une seconde table de calibration, dite de référence, contenant les réponses vectorielles du réseau $\underline{b}_1(F_0, \underline{X}_i)$ et $\underline{b}_2(F_0, \underline{X}_i)$ orthonormalisées,

○ acquérir sur ledit réseau d'antennes le signal reçu issu de ladite onde électromagnétique de gisement $\underline{\theta}_0$ ou d'élévation $\underline{h}_0$ et de fréquence $F_0$ et appliquer audit signal une méthode de goniométrie comportant les étapes suivantes :

➢ calculer la matrice de covariance $R_{xx}$ dudit signal reçu sur le dit réseau d'antennes,

➢ calculer la fonction de coût $C(\underline{X}_j) = |<\underline{U}°.\underline{b}_1(F_0, \underline{X}_j)>|^2 + |<\underline{U}°.\underline{b}_2(F_0, \underline{X}_j)>|^2$, où $\underline{U}$ est le vecteur propre normalisé associé à la valeur propre maximum de la matrice $R_{xx}$, ou la première colonne normalisée de la matrice $R_{xx}$, et $|<\underline{a}°.\underline{b}>|^2$ représente la norme au carré du produit scalaire entre le vecteur $\underline{a}$ transposé conjugué et le vecteur $\underline{b}$,➢ rechercher le point qui maximise ladite fonction de coût et en déduire son abscisse $\underline{X}_0$ qui est une estimée de la direction d'arrivée dudit signal en gisement ou en élévation,

➢ affiner l'estimation $\underline{X}_0$ par une interpolation quadratique locale.

○

Dans une variante de réalisation de l'invention l'étape d'orthonormalisation est effectuée à partir de la méthode de Gram-Schmidt.

Dans une variante de réalisation de l'invention la table de calibration dudit réseau d'antennes est obtenue a partir d'une simulation électromagnétique des deux fronts d'onde plans de polarisation POL1 et POL2.

Dans une variante de réalisation de l'invention la polarisation $P_0$ de ladite onde électromagnétique incidente et les polarisations POL1 et POL2 sont des polarisations verticales, horizontales, circulaires droite, circulaires gauche ou elliptiques.

L'invention a également pour objet un système pour la détermination de la direction d'arrivée d'une onde électromagnétique incidente de gisement $\underline{\theta}_0$, d'élévation $\underline{h}_0$, de fréquence $F_0$ et de polarisation quelconque $\underline{P}_0$, caractérisé en ce qu'il comporte un unique réseau d'antennes composé d'une pluralité d'éléments rayonnants dont la direction de pointage est inclinée d'un angle $\alpha$ non nul par rapport à une direction de référence, une table de calibration dudit réseau d'antennes et un radiogoniomètre, ledit système comportant des moyens pour exécuter les étapes du procédé décrit précédemment.

Dans une variante de réalisation de l'invention les éléments rayonnants composants ledit réseau d'antennes sont des éléments rayonnants simples tels que des dipôles ou des monopôles.

Dans une variante de réalisation de l'invention l'angle d'inclinaison $\alpha$ desdits éléments rayonnants est égal à 45°.

D'autres caractéristiques apparaîtront à la lecture de la description détaillée donnée à titre d'exemple et non limitative qui suit faite en regard de dessins annexés qui représentent :

La figure 1, un schéma d'un réseau d'antennes à diversité de polarisation selon l'invention pour une application terrestre ou marine,
La figure 2, un schéma d'un réseau d'antennes présentant une diversité de polarisation pour une application aéroportée,
La figure 3, le même schéma que la figure 2 mais selon une vue de profil.

La présente invention utilise un unique réseau d'antennes non ambigu comportant des éléments rayonnants sensibles à deux polarisations distinctes quelconques. Dans une première étape, l'invention consiste à concevoir un tel réseau. Dans les applications les plus courantes, un réseau d'antennes n'est sensible qu'à une seule polarisation, par exemple une polarisation verticale ou horizontale, car les éléments rayonnants qui le composent sont eux-mêmes positionnés verticalement ou horizontalement.

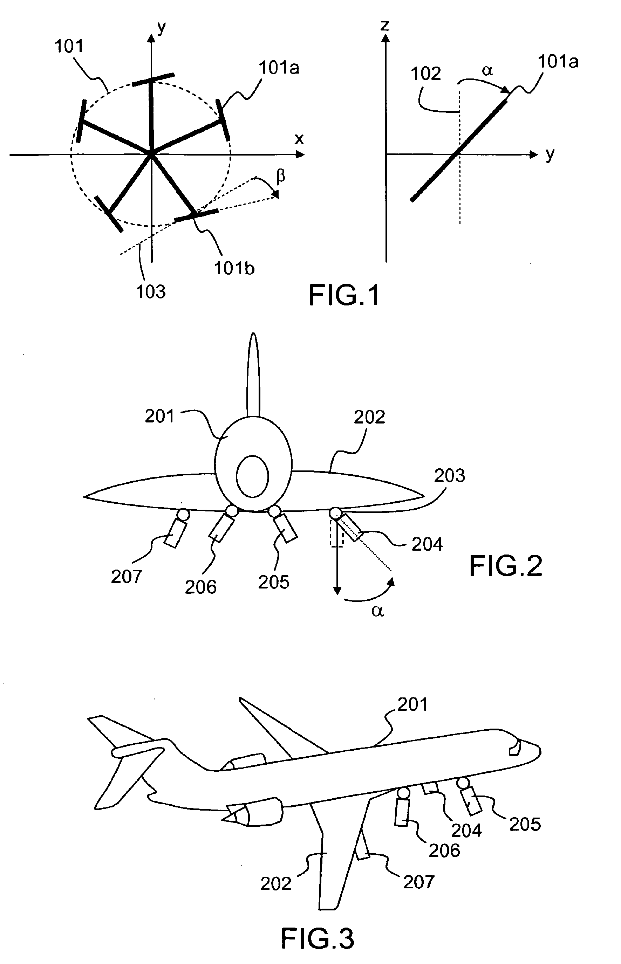

La figure 1 schématise un exemple de réseau d'antennes 101 selon l'invention qui comprend une pluralité d'éléments rayonnants 101 a,101 b qui peuvent être, par exemple, des dipôles pour le cas d'applications terrestres ou marines, ou des monopôles pour le cas d'applications aéroportées. Le réseau d'antennes 101 est disposé selon un cercle, les différents éléments rayonnants 101 a,101 b constituant ce réseau étant reliés à un mat central. La disposition des éléments rayonnants sur un cercle est mentionnée à titre d'exemple dans le cadre d'un mode de réalisation de l'invention. Cette disposition n'est nullement limitative et tout type de configuration de réseau d'antennes est également compatible de l'invention.

Le réseau est représenté en vue de dessus sur la gauche du dessin et un des éléments rayonnants dudit réseau est schématisé en vue de profil sur la droite de la figure 1. Afin de le rendre sensible à la diversité de polarisation, chaque élément rayonnant 101 a,101 b est incliné d'un angle $\alpha_i$ non nul par rapport à l'axe vertical 102 et d'un angle $\beta_i$ par rapport à un axe 103 tangent au cercle sur lequel sont disposées les antennes du réseau d'antennes 101. L'angle $\alpha_i$ est préférablement égal à 45°. L'angle $\beta_i$ peut être quelconque, notamment égal à zéro pour rendre le réseau simple à construire. Les angles d'inclinaison ($\alpha_i$, $\beta_i$) de chaque élément rayonnant sont indépendants et ne sont pas forcément égaux à la même valeur. Dans ce cas ledit réseau d'antennes 101 présente une réponse vectorielle non colinéaire pour deux polarisations distinctes et quelconques, c'est-à-dire que le vecteur directionnel correspondant à la réponse dudit réseau à une onde incidente de polarisation POL1 ne sera pas colinéaire au vecteur directionnel correspondant à la réponse du même réseau à une autre onde incidente de polarisation POL2 différente de POL1.

La figure 2 schématise le positionnement d'un élément rayonnant 204,205,206,207 sur un avion 201. Dans ce type d'application aéroportée, les éléments rayonnants utilisés sont le plus souvent des monopôles, par exemple des antennes sabre ou « blade antenna » en anglais. Une antenne sabre 204,205,206,207 est le plus souvent disposée sous le fuselage de l'avion 201 ou sous l'aile 202 de l'avion en position verticale présentant donc une sensibilité unique aux ondes incidentes polarisées verticalement. Un réseau d'antennes selon la présente invention pour une application aéroportée est composée d'antennes sabres 204 positionnées sur des semelles d'inclinaisons 203 qui permettent aux dites antennes 204 de pivoter afin d'offrir une inclinaison d'un angle $\alpha$ par rapport à l'axe vertical. Les éléments rayonnants 204,205,206,207 constituent ensemble un réseau d'antennes selon l'invention dans le cadre d'un mode de réalisation différent de celui illustré à l'appui de la figure 1.

La figure 3 représente les mêmes éléments rayonnants 204,205,206,207 positionnés sur un avion 201 représenté en vue de profil.

Dans une deuxième étape, l'invention consiste à déterminer la table de calibration du réseau d'antennes précédemment défini à l'appui des figures 1 et 2 pour deux polarisations différentes et quelconques qu'on appellera dans la suite de la description POL1 et POL2. Ces polarisations peuvent être verticales, horizontales, elliptiques ou encore circulaires droites ou gauches. Une configuration possible consiste à affecter une polarisation verticale à POL1 et une polarisation horizontale à POL2, cependant tout type de combinaison utilisant un type de polarisation pour POL1 et un autre type de polarisation pour POL2 est possible.

La calibration du réseau d'antennes peut être obtenue à partir d'une mesure sur deux signaux reçus distincts issus respectivement d'une onde dont le champ électromagnétique est polarisé selon la polarisation POL1 et d'une onde dont le champ électromagnétique est polarisé selon la polarisation POL2. Cette calibration consiste à déterminer la réponse vectorielle complexe, c'est-à-dire la phase et l'amplitude différentielle, de l'ensemble des éléments rayonnants du réseau d'antennes à un front d'onde plan de fréquence $F_i$ et de gisement $\theta_j$ dont le champ électromagnétique est polarisé selon la polarisation POL1, respectivement POL2. A titre de rappel, le terme gisement est utilisé en référence à l'angle formé entre l'axe de propagation d'une onde et la direction d'un point extérieur donné. Cet angle permet de définir la direction d'arrivée d'une onde.

La fréquence $F_i$ et le gisement $\theta_j$ varient dans des intervalles de fréquence $[F_1, F_2]$ et de gisement $[\underline{\theta}_1, \underline{\theta}_2]$ avec un pas de variation fixé a priori afin de pouvoir interpoler chacune des réponses vectorielles obtenues dans l'optique de déterminer la réponse vectorielle associée à toute fréquence et gisement inclus dans lesdits intervalles. Les intervalles $[F_1, F_2]$ et $[\underline{\theta}_1, \underline{\theta}_2]$ sont fixés à priori en fonction du type d'application visée. L'intervalle de fréquence est par exemple égal à une bande de fréquence standard telle la bande UHF. L'intervalle de gisement est déterminé en fonction de la plage de variation du gisement que l'on souhaite couvrir.

Cette étape de calibration selon l'invention aboutit à l'obtention d'une table de calibration qui comprend, pour les deux polarisations POL1 et POL2 distinctes, deux vecteurs de réponse $\underline{a}_1(F_i, \underline{\theta}_j)$ et $\underline{a}_2(F_i, \underline{\theta}_j)$ pour l'ensemble des fréquences $F_i$ et des gisements $\underline{\theta}_j$ considérés.

Dans une variante de réalisation, la calibration du réseau d'antennes peut être réalisée par simulation électromagnétique du comportement dudit réseau en réponse à une onde polarisée selon POL1 ou POL2.

Dans une troisième étape, le procédé selon l'invention consiste à interpoler en fréquence les réponses vectorielles $\underline{a}_1(F_i, \underline{\theta}_j)$ et $a_2(F_i, \underline{\theta}_j)$ précédemment déterminées afin d'obtenir, pour une fréquence $F_0$ de fonctionnement appartenant à l'intervalle $[F_1, F_2]$ considéré, les réponses vectorielles interpolées $\underline{a}_1, (F_0, \theta_j)$ et $a_2(F_0, \underline{\theta}_j)$, pour chacune des polarisations POL1 et POL2 et pour tout gisement $\theta_j$.

Dans une étape supplémentaire, le procédé selon l'invention consiste à orthonormaliser chaque couple de vecteurs $(\underline{a}_1(F_0, \underline{\theta}_j), \underline{a}_2(F_0, \underline{\theta}_j))$ de la table de calibration précédemment obtenue, par exemple en utilisant la méthode de Gram-Schmidt connue de l'Homme du métier. Cette étape aboutit à la génération d'une nouvelle table de calibration de référence du réseau d'antennes constituée d'une base orthonormée de vecteurs $\underline{b}_1(F_0, \underline{\theta}_j)$ et $\underline{b}_2(F_0, \underline{\theta}_j)$ valables pour la fréquence $F_0$.

Les étapes de l'invention décrites précédemment dans le cadre d'une estimation de la direction d'arrivée d'une onde électromagnétique à partir d'une information de gisement $\underline{\theta}_j$ restent valables pour toute autre information caractérisant la direction d'arrivée telle que notamment l'élévation $h_k$. A cet effet, l'étape de calibration décrite reste valable lorsqu'on remplace une valeur de gisement $\theta_j$ par une valeur d'élévation $h_k$

Enfin, la dernière étape du procédé est la mise en oeuvre d'une méthode de goniométrie en gisement. Cette méthode consiste à acquérir les signaux radioélectriques dont on cherche à mesurer la direction d'arrivée. Cette acquisition est faite par le réseau d'antennes selon l'invention, sensible aux deux polarisations POL1 et POL2, préalablement conçu. Ensuite, un dispositif de goniométrie met en oeuvre le calcul de la matrice de covariance $R_{xx}$ des signaux reçus puis détermine le vecteur propre $\underline{U}$ associé à la valeur propre maximale de cette matrice $R_{xx}$. Ce vecteur propre $\underline{U}$ est ensuite normalisé et utilisé pour calculer une fonction de coût $C(\theta_j)$ aux points $\underline{b}_1(F_0, \theta_j)$ et $\underline{b}_2(F_0, \theta_j)$ précédemment déterminés. Cette fonction est donnée par la relation suivante :

$$C(\underline{\theta}_j) = \left| < \underline{U}^\circ \underline{b}_1(F_0, \underline{\theta}_j) > \right|^2 + \left| < \underline{U}^\circ \underline{b}_2(F_0, \underline{\theta}_j) > \right|^2 \quad (1)$$

où $|<\underline{a}°.\underline{b}>|^2$ désigne la norme au carré du produit scalaire entre le vecteur $\underline{a}$ transposé et conjugué et le vecteur $\underline{b}$.

La fonction de coût $C(\underline{\theta}_j)$ est calculée pour toutes les valeurs de gisement $\underline{\theta}_j$ disponibles. Le point $P=C(\underline{\theta}_0)$ de la fonction de coût d'abscisse $\underline{\theta}_0$ qui maximise cette fonction de coût correspond à l'estimée de la valeur de gisement $\underline{\theta}_0$ indiquant la direction d'arrivée du signal reçu. Afin d'affiner la précision de l'estimation, il est souhaitable d'effectuer une interpolation quadratique autour du point d'abscisse $\underline{\theta}_0$ afin de déterminer encore plus précisément la valeur du gisement incident recherché.

Dans une variante de réalisation, le vecteur propre $\underline{U}$ associé à la valeur propre maximale de la matrice de covariance $R_{xx}$ peut être remplacé par la première colonne normalisée $\underline{X}$ de cette matrice, la suite des calculs amenant à l'estimation du gisement incident $\underline{\theta}_0$ restant inchangée.

La méthode de goniométrie décrite ci-dessus est avantageusement utilisée dans le cadre de l'invention dans le but de déterminer précisément le gisement de l'onde incidente reçue. La méthode décrite n'est pas limitative, et il est entendu que toute méthode de goniométrie utilisant la diversité de polarisation d'un réseau d'antennes peut être utilisée conjointement avec ledit réseau selon l'invention et sa table de calibration de référence associée. En particulier toute méthode de goniométrie permettant de déterminer le gisement d'une onde incidente reçue par un réseau antennaire à partir des réponses vectorielles dudit réseau antennaire à deux signaux de polarisations distinctes quelconques est compatible de la présente invention.

Dans une variante de réalisation, le procédé selon l'invention peut également s'appliquer à l'estimation de l'élévation $h_0$ de la source rayonnant le signal radioélectrique reçu. Dans ce cas la table de calibration contient une dimension supplémentaire correspondant à l'élévation $h_k$. La méthode de goniométrie mise en oeuvre doit également permettre de déterminer l'élévation $h_k$ dans ce cas.

L'invention présente l'avantage d'utiliser un seul réseau d'antennes constitué d'éléments rayonnants simples tels que des dipôles inclinés et un nombre de voies de réception réduit. En particulier un réseau d'antennes dédié initialement à la polarisation verticale peut être utilisé en dégradant sa polarisation croisée pour lui donner une diversité de polarisation. Ceci peut être réalisé, par exemple, en inclinant chaque élément rayonnant d'un angle de $\pm 45°$ par rapport à la verticale de façon à les rendre sensibles à la polarisation verticale et horizontale.

De plus la méthode de goniométrie mise en oeuvre est directe, c'est à dire qu'un seul signal est acquis et traité afin de produire une estimation de la direction d'arrivée.

L'invention permet de traiter efficacement tout type de polarisation même si les éléments rayonnants du réseau d'antennes utilisé ont une mauvaise polarisation croisée.

L'invention présente, de plus, un avantage particulier dans un contexte aéroporté pour lequel les antennes utilisées sont généralement des monopôles de type antennes sabre prévues pour être installées et polarisées verticalement et donc ne traiter que la polarisation verticale. De plus, il n'est pas possible, compte tenu de la place disponible sur la surface d'un avion de positionner un second réseau d'antennes à polarisation horizontale, qui plus est de couverture omnidirectionnelle. L'invention, qui se base sur l'utilisation d'un seul réseau d'antennes sensible à deux polarisations distinctes présente donc un avantage considérable pour un déploiement du système visé sur un avion.

Dans un contexte terrestre, l'invention est également avantageuse car elle permet de disposer d'un seul réseau d'antennes à bas coût permettant de traiter tout type de polarisation.

## Revendications

1. Procédé de détermination de la direction d'arrivée d'une onde électromagnétique incidente de gisement $\underline{\theta}_0$, d'élévation $\underline{h}_0$, de fréquence $F_0$ et de polarisation quelconque $\underline{P}_0$, comportant au moins les étapes suivantes :

   ○ concevoir un unique réseau d'antennes comportant une pluralité d'éléments rayonnants pour chacun desquels les réponses vectorielles à deux signaux de polarisations distinctes POL1 et POL2 ne sont pas colinéaires,
   ○ déterminer une première table de calibration dudit réseau d'antennes contenant les réponses vectorielles $\underline{a}_1(F_i,\underline{X}_j)$ et $\underline{a}_2(F_i,\underline{X}_j)$ dudit réseau à deux fronts d'onde plans de polarisations distinctes POL1 et POL2 ,pour un ensemble de fréquences $F_i$ appartenant à un intervalle donné $[F_1,F_2]$ et un ensemble d'angles $\underline{X}_j$ appartenant à un intervalle donné $[\underline{X}_1,\underline{X}_2]$, lesdits angles $\underline{X}_j$ étant des angles de gisement $\underline{\theta}_j$ ou des angles d'élévation $h_j$,
   ○ interpoler à ladite fréquence $F_0$ les réponses vectorielles $\underline{a}_1(F_0,\underline{X}_j)$ et $\underline{a}_2(F_0,\underline{X}_j)$ du réseau pour chaque valeur $\underline{X}_j$ dudit intervalle $[X_1,X_2]$,
   ○ orthonormaliser lesdites réponses vectorielles $\underline{a}_1(F_0,\underline{X}_j)$ et $\underline{a}_2(F_0,\underline{X}_j)$ afin de produire une seconde table de calibration, dite de référence, contenant les réponses vectorielles du réseau $\underline{b}_1(F_0, \underline{X}_j)$ et $\underline{b}_2(F_0,\underline{X}_j)$ orthonormalisées,

   ledit procédé étant **caractérisé en ce qu'**il comporte en outre l'étape suivante :

   ○ acquérir sur ledit réseau d'antennes le signal reçu issu de ladite onde électromagnétique de gisement $\underline{\theta}_0$ ou d'élévation $\underline{h}_0$ et de fréquence $F_0$ et appliquer audit signal une méthode de goniométrie comportant les étapes suivantes :

      ➢ calculer la matrice de covariance $R_{xx}$ dudit signal reçu sur le dit réseau d'antennes,

➢ calculer la fonction de coût $C(\underline{X}_j)=|<\underline{U}°.\underline{b}_1(F_0,\underline{X}_j)>|^2+|<\underline{U}°.\underline{b}_2(F_0,\underline{X}_j)>|^2$, où $\underline{U}$ est le vecteur propre normalisé associé à la valeur propre maximum de la matrice $R_{xx}$, ou la première colonne normalisée de la matrice $R_{xx}$, et $|<a°.b>|^2$ représente la norme au carré du produit scalaire entre le vecteur $\underline{a}$ transposé conjugué et le vecteur $\underline{b}$,

➢ rechercher le point qui maximise ladite fonction de coût et en déduire son abscisse $\underline{X}_0$ qui est une estimée de la direction d'arrivée dudit signal en gisement ou en élévation,

➢ affiner l'estimation $\underline{X}_0$ par une interpolation quadratique locale.

**2.** Procédé selon la revendication 1 **caractérisé en ce que** l'étape d'orthonormalisation est effectuée à partir de la méthode de Gram-Schmidt.

**3.** Procédé selon l'une des revendications précédentes **caractérisé en ce que** la table de calibration dudit réseau d'antennes est obtenue a partir d'une simulation électromagnétique des deux fronts d'onde plans de polarisation POL1 et POL2.

**4.** Procédé selon l'une des revendications précédentes **caractérisé en ce que** la polarisation $P_0$ de ladite onde électromagnétique incidente et les polarisations POL1 et POL2 sont des polarisations verticales, horizontales, circulaires droite, circulaires gauche ou elliptiques.

**5.** Système pour la détermination de la direction d'arrivée d'une onde électromagnétique incidente de gisement $\underline{\theta}_0$, d'élévation $\underline{h}_0$, de fréquence $F_0$ et de polarisation quelconque $\underline{P}_0$ ,**caractérisé en ce qu'**il comporte un unique réseau d'antennes (101) composé d'une pluralité d'éléments rayonnants (101 a,101 b) dont la direction de pointage est inclinée d'un angle $\alpha$ non nul par rapport à une direction de référence (102), une table de calibration dudit réseau d'antennes et un radiogoniomètre, ledit système comportant des moyens pour exécuter les étapes du procédé selon l'une des revendications 1 à 4.

**6.** Système selon la revendication 5 **caractérisé en ce que** les éléments rayonnants composants ledit réseau d'antennes sont des éléments rayonnants simples tels que des dipôles ou des monopôles.

**7.** Système selon les revendications 5 ou 6 **caractérisé en ce que** l'angle d'inclinaison $\alpha$ desdits éléments rayonnants est égal à 45°

## Patentansprüche

**1.** Verfahren zum Bestimmen der Einfallsrichtung einer einfallenden elektromagnetischen Welle mit der Peilung $\underline{\theta}_0$, dem El-Winkel $\underline{h}_0$, der Frequenz $F_0$ und einer beliebigen Polarisierung $\underline{P}_0$, das mindestens die folgenden Schritte umfasst:

○ Entwurf eines einzigen Antennennetzwerks, das eine Vielzahl strahlender Elemente aufweist, wobei für jedes derselben die Vektorantworten auf zwei unterschiedliche Polarisierungssignale POL1 und POL2 nicht kolinear sind,

○ Bestimmen einer ersten Kalibrierungstafel des Antennennetzwerks, das die Vektorantworten $\underline{a}_1(F_i, \underline{X}_j)$ und $\underline{a}_2(F_i, \underline{X}_j)$ des Netzwerks auf zwei ebene Wellenfronten unterschiedlicher Polarisierungen POL1 und POL2 für eine Gruppe von Frequenzen $F_i$ enthält, die zu einem bestimmten Intervall $[F_1, F_2]$ gehören, und eine Gruppe von Winkeln $\underline{X}_i$, die zu einem bestimmten Intervall $[\underline{X}_1, \underline{X}_2]$ gehören, wobei die Winkel $\underline{X}_i$ Peilungswinkel $\underline{\theta}_j$ oder El-Winkel $\underline{h}_j$ sind,

○ Interpolieren mit der Frequenz $F_0$ der Vektorantworten $a_1(F_0,\underline{X}_j)$ und $\underline{a}_2(F_0, \underline{X}_j)$ des Netzwerks für jeden Wert $\underline{X}_j$ des Intervalls $[\underline{X}_1, \underline{X}_2]$,

○ Orthonormieren der Vektorantworten $\underline{a}_1(F_0, \underline{X}_i)$ und $\underline{a}_2(F_0, \underline{X}_i)$, um eine zweite, sogenannte Referenz-Kalibrierungstafel zu produzieren, die die orthonormierten Vektorantworten des Netzwerks $\underline{b}_1(F_0, \underline{X}_j)$ und $b_2(F_0, \underline{X}_j)$ enthält,

wobei das Verfahren **dadurch gekennzeichnet ist, dass** es ferner den folgenden Schritt umfasst:

o Erlangen des Empfangssignals über das Antennennetzwerk, wobei sich das Empfangssignal aus der elektromagnetischen Peilungs- $\underline{\theta}_0$ oder El-Winkelwelle $\underline{h}_0$ und der Frequenz $F_0$ ergibt und Anwenden einer Goniometriemethode auf das Signal, die die folgenden Schritte aufweist:

➢ Berechnen der Kovarianzmatrix $R_{xx}$ des über das Antennennetzwerk empfangenen Signals,

➢ Berechnen der Kostenfunktion $C(\underline{X_j})=|<\underline{U}°.\underline{b_1}(F_0,\underline{X_j})>|^2+|<\underline{U}°.\underline{b_2}(F_0,\underline{X_j})>|^2$, wobei $\underline{U}$ der normierte Eigenvektor ist, der dem maximalen Eigenwert der Matrix $R_{xx}$ zugeordnet ist oder die erste normierte Spalte der Matrix $R_{xx}$, und $|<\underline{a}°.\underline{b}>|^2$ die Norm zum Quadrat des skalaren Produkts zwischen dem konjugierten transponierten Vektor $\underline{a}$ und dem Vektor $\underline{b}$ darstellt,

➢ Suche des Punkts, der die Kostenfunktion maximiert, und Ableitung seiner Abszisse $\underline{X_0}$ daraus, die eine Schätzung der Ankunftsrichtung des Peilungs- oder El-Winkelsignals ist,

➢ Verfeinerung der Schätzung $\underline{X_0}$ durch lokale quadratische Interpolation.

2. Verfahren nach Anspruch 1, **dadurch gekennzeichnet, dass** der Orthonormierungsschritt mit der Gram-Schmidt-Methode durchgeführt wird.

3. Verfahren nach einem der vorangehenden Ansprüche, **dadurch gekennzeichnet, dass** die Kalibrierungstafel des Antennennetzwerks aus einer elektromagnetischen Simulation der zwei ebenen Polarisierungs-Wellenfronten POL1 und POL2 gewonnen wird.

4. Verfahren nach einem der vorangehenden Ansprüche, **dadurch gekennzeichnet, dass** die Polarisierung $P_0$ der einfallenden elektromagnetischen Welle und die Polarisierungen POL1 und POL2 vertikale, horizontale, kreisförmige Rechts-, kreisförmige Links- oder elliptische Polarisierungen sind.

5. System zum Bestimmen der Einfallsrichtung einer einfallenden elektromagnetischen Welle mit der Peilung $\underline{\theta_0}$, dem El-Winkel $\underline{h_0}$, der Frequenz $F_0$ und einer beliebigen Polarisierung $\underline{P_0}$, **dadurch gekennzeichnet, dass** es ein einziges Antennennetzwerk (101) aufweist, das aus einer Vielzahl strahlender Elemente (101a, 101b), deren Zielrichtung in einem Winkel $\alpha$ ungleich null im Verhältnis zu einer Referenzrichtung (102) geneigt ist, einer Kalibrierungstafel des Antennennetzwerks und einem Funkgoniometer besteht, wobei das System Mittel aufweist, um die Schritte des Verfahrens nach einem der Ansprüche 1 bis 4 durchzuführen.

6. System nach Anspruch 5, **dadurch gekennzeichnet, dass** die strahlenden Elemente, die das Antennennetzwerk bilden, einfache strahlende Elemente wie Dipole oder Monopole sind.

7. System nach den Ansprüchen 5 oder 6, **dadurch gekennzeichnet, dass** der Neigungswinkel $\alpha$ der strahlenden Elemente gleich 45° ist.

## Claims

1. A method for determining the direction of arrival of an incident electromagnetic wave by bearing $\underline{\theta_0}$, by elevation $\underline{h_0}$, by frequency $F_0$ and by any polarisation $\underline{P_0}$, comprising at least the following steps:

○ designing a single antenna array comprising a plurality of radiating elements, for each of which the vector responses to two distinct polarisation signals POL1 and POL2 are not collinear;

○ determining a first calibration table of said antenna array containing the vector responses $\underline{a_1}(F_i, \underline{X_j})$ and $\underline{a_2}(F_i, \underline{X_j})$ of said array to two flat wave fronts of distinct polarisations POL1 and POL2 for a set of frequencies $\overline{F_i}$ belonging to a given interval $[F_1, F_2]$ and a set of angles $\underline{X_j}$ belonging to a given interval $[\underline{X_1}, \underline{X_2}]$, said angles $\underline{X_j}$ being bearing angles $\underline{\theta_j}$, or elevation angles $\underline{h_j}$;

○ interpolating at said frequency $F_0$ the vector responses $\underline{a_1}(F_0, \underline{X_j})$ and $\underline{a_2}(F_0, \underline{X_j})$ of said array for each value $\underline{X_j}$ of said interval $[\underline{X_1}, \underline{X_2}]$;

○ orthonormalising said vector responses $\underline{a_1}(F_0, \underline{X_j})$ and $\underline{a_2}(F_0, \underline{X_j})$ so as to produce a second calibration table, referred to as reference table, containing the orthonormalised response vectors $\underline{b_1}(F_0, \underline{X_j})$ and $\underline{b_2}(F_0, \underline{X_j})$ of said array;

said method being **characterised in that** it further comprises the following step:

○ acquiring on said antenna array the received signal coming from said electromagnetic wave by bearing $\underline{\theta_0}$ or by elevation $\underline{h_0}$ and by frequency $F_0$ and applying a goniometry method to said signal comprising the following steps:

➢ calculating the covariance matrix $R_{xx}$ of said received signal on said antenna array;

7

➢ calculating the cost function $C(\underline{X}_j)=|<\underline{U}°.\underline{b_1}(F_0,X_j)>|^2+|<\underline{U}°.\underline{b_2}(F_0,\underline{X}_j)>|^2$ where $\underline{U}$ is the normalised eigenvector associated with the maximum eigenvalue of the matrix $R_{xx}$ or the first normalised column of the matrix $R_{xx}$ any $|<a°.b>|^2$ represents the squared norm of the scalar product between the transposed conjugate vector $\underline{a}$ and the vector $\underline{b}$;

➢ finding the point that maximises said cost function and deducing its abscissa $\underline{X}_0$ therefrom, which is an estimate of the direction of arrival of said signal by bearing or by elevation;

➢ refining the estimate $\underline{X}_0$ by a local quadratic interpolation.

2. The method according to claim 1, **characterised in that** said orthonormalisation step is carried out on the basis of the Gram-Schmidt method.

3. The method according to any one of the preceding claims, **characterised in that** said calibration table of said antenna array is obtained on the basis of an electromagnetic simulation of the two flat wave fronts of polarisation POL1 and POL2.

4. The method according to any one of the preceding claims, **characterised in that** the polarisation $P_0$ of said incident electromagnetic wave and the polarisations POL1 and POL2 are vertical, horizontal, right-hand circular, left-hand circular or elliptical polarisations.

5. A system for determining the direction of arrival of an incident electromagnetic wave by bearing $\underline{\theta}_0$. by elevation $\underline{h}_0$, by frequency $F_0$ and by any polarisation $\underline{P}_0$, **characterised in that** it comprises a single antenna array (101) composed of a plurality of radiating elements (101a, 101b), the pointing direction of which is inclined by an angle $\alpha$ that is non-zero relative to a reference direction (102), a calibration table of said antenna array and a radiogoniometer, said system comprising means for executing the steps of the method according to any one of claims 1 to 4.

6. The system according to claim 5, **characterised in that** said radiating elements comprising said antenna array are simple radiating elements such as dipoles or monopoles.

7. The system according to claims 5 or 6, **characterised in that** the angle of inclination $\alpha$ of said radiating elements is equal to 45°.

**FIG.1**

**FIG.2**

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7268728 B